# EUROPEAN PATENT SPECIFICATION

(11) **EP 3 166 455 B1**
(45) Date of publication and mention of the grant of the patent: **30.09.2020**
(21) Application number: 15734186.8
(22) Date of filing: 07.07.2015
(51) Int. Cl.: A47J 31/44

(54) **DEVICE FOR CONNECTING A BEVERAGE MACHINE TO A DISTRIBUTION NETWORK WITH SAFE FLOW INTERRUPTION**
VORRICHTUNG ZUM VERBINDEN EINER GETRÄNKEMASCHINE MIT EINEM VERTEILUNGSNETZ MIT SICHERER STRÖMUNGSUNTERBRECHUNG
DISPOSITIF DE RACCORDEMENT D'UNE MACHINE À BOISSON À UN RÉSEAU DE DISTRIBUTION AVEC INTERRUPTION DE L'ÉCOULEMENT SÉCURISÉE

(30) Priority: 09.07.2014 EP 14176240
(43) Date of publication of application: 17.05.2017
(73) Proprietor: Société des Produits Nestlé S.A., 1800 Vevey (CH)
(72) Inventor: LAGOUCHE, Laurent, 74500 EVIAN LES BAINS (FR); GUYON, Bertrand, 25160 Saint Point Lac (FR); LARZUL, David, 69330 Meyzieu (FR)
(74) Representative: Schnyder, Frank Simon
(86) International application number: PCT/EP2015/065409
(87) International publication number: WO 2016/005348

(56) References cited:
- EP-A1- 0 244 010
- EP-A1- 1 462 040
- EP-B1- 1 937 121
- WO-A2-2007/046702
- US-A1- 2011 212 236

## Description

### Field of the Invention

The present invention concerns the supply of liquid from a liquid distribution network, such as from a city water distribution network (typically the network supplying water to the tap valve in households), to a beverage preparation machine.

For the purpose of the present description, a "beverage" is meant to include any liquid food, such as tea, coffee, hot or cold chocolate, milk, soup, baby food, etc... A "cartridge" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid capsules containing the ingredient. The cartridge may contain an amount of ingredient for preparing a single beverage serving or a plurality of beverage servings.

### Background Art

Beverage preparation machines have been known for a number of years. For example, US 5,943,472 discloses a water circulation system between a water reservoir and a hot water or vapour distribution chamber of an espresso machine. The circulation system includes a valve, metallic heating tube and pump that are connected together and to the reservoir. US 2011/212236 discloses also another beverage preparation machine.

A beverage preparation machine typically includes a housing containing a beverage processing module and a water tank in fluid communication with the beverage processing module. Examples of such beverage preparation machines are disclosed in EP 1 208 782, EP 1 267 687, EP 1 686 879, EP 1 731 065, EP 1 829 469, EP 1 864 598, EP 1 865 815, EP 1 867 260, EP 1 878 368, EP 2 222 210, EP 2 222 211, EP 2 222 212, EP 2 227 121, EP 2 227 122, US 2008/0006159, US 7,165,488, WO 2007/111884, WO 2009/074553, WO 2010/015427 and WO 2012/055767.

Usually the water tank is removable to be refilled by a user when empty. Some systems include a continuous water supply by connecting the beverage machine directly to the city water distribution network, as for instance disclosed in CN201076369. This publication discloses a system that has a refillable water tank as well as an inlet for direct connection with the tap. Hence, beverage preparation can be carried out either by using water directly from the tap or from the water tank.

### Summary of the Invention

The invention thus relates to a connecting device for connecting a beverage preparation machine with an external liquid delivery system, e.g. a water distribution network, to supply such liquid to the machine. Typically, liquid is supplied to the connecting device at a pressure above the atmospheric pressure, e.g. in the range of 1.1 to 20 bar, typically 1.2 to 15 bar, such as 1.5 to 10 bar, for instance 2 to 6 bar.

For instance, the machine has a liquid storage tank, e.g. a tank with an upper opening, such as an opening delimited by a rim of the tank. The tank can be delimited by a bottom part and a peripheral wall extending from and above the bottom part towards the opening. For instance, the tank has an outlet for dispensing liquid to a beverage processing and deliver unit of the machine. Such an outlet can be located at the bottom part of the tank.

The tank can be removable or fixed in the machine. The tank can be manually refillable (typically when not fitted with the connecting device).

Alternatively, the tank can be a buffer reservoir integrated in machine and/or in the connecting device, e.g. not intended for manual refilling, the filling of which is controlled by the connecting device.

The connecting device has: an inlet for a fluid connection to the external system; an outlet for delivering liquid from the external system via the inlet to the beverage machine; a valve arrangement switchable between an open configuration for establishing a fluidic connection between the inlet and the outlet and a closed configuration for interrupting the fluidic connection, such as a valve arrangement connected to the inlet via a fluid connector e.g. a fluid connector fixed to a frame portion of a body of such device; and a control unit for switching the valve arrangement between its open configuration and its closed configuration.

In accordance with the invention, the valve arrangement comprises two or more valves that are in serial fluidic configuration between the inlet and the outlet.

Two such valves that that are in serial fluidic configuration can be controlled in parallel by the control unit to be both simultaneously open for establishing the fluidic connection between the inlet and the outlet or to be both simultaneously closed for interrupting the fluidic connection.

Two such valves that that are in serial fluidic configuration may be controlled separately so that: a first valve (e.g. a main or control valve) of such valves is open or closed for establishing or interrupting the fluidic connection between the inlet and the outlet as required for supplying liquid to the machine; and a second valve (e.g. a backup or safety valve) of such valves is open as long as the first valve opens and closes as controlled by the control unit and is then closed when the first valve is malfunctioning (e.g. mechanical and/or electric failure so that it does not (fully) close anymore). For instance, at least one sensor, e.g. a flowmeter and/or an overfill level sensor, is connected to the control unit for sensing an on-going flow of liquid via the inlet and the outlet after the control unit has attempted to switch the first valve into its closed configuration and for triggering the control unit to switch the second valve into its closed configuration.

Hence, by providing a serial fluidic arrangement of a plurality of valves (e.g. two valves) that are controlled in parallel (e.g. in the same manner) or separately, the possibility of mal-functioning of one valve, e.g. because of mechanical failure or electrical failure or lime clogging of this valve, does not prevent the other valve(s) from being closed and from interrupting the fluidic connection. It follows that a malfunction of one valve (e.g. unable to fully interrupt the fluidic connection) does not lead to an overflow of the tank.

The control unit may be arranged to detect a malfunctioning of at least one valve to then indicate to a user such malfunctioning via an indicator and/or block the non-malfunctioning valve in its closed configuration with or without automatically switching-off the connecting device.

Typically, the device comprises a sensor arrangement connected to the control unit that is configured to switch the valve arrangement in response to a triggering signal from the sensor arrangement.

For instance, the sensor arrangement is arranged to sense a level of liquid in a liquid tank (e.g. a buffer), part of the machine, of the device or separate therefrom (self-standing). When the machine and the device are arranged to operate without liquid tank, the senor arrangement may be arranged to sense a request for beverage processing in the machine for immediate supply of liquid and processing in the machine to prepare a beverage, e.g. an on-demand liquid supply. In practice, such a sensor arrangement (for configurations without liquid tank) may be part of a user-interface, e.g. a user-button such as a touch or proximity (e.g. capacitive) button, for initiating a beverage preparation.

The outlet can be configured to deliver liquid from the external system into a tank of the machine or into a tank of such connecting device. It is also possible that the machine is provided with a machine tank and the connecting device with a connecting device tank (different to the machine tank).

When the machine has a tank, the tank typically has an upper opening, such as an opening delimited by a rim of the tank. The tank can be delimited by a bottom part and a peripheral wall extending from and above the bottom part towards the opening.

Examples of beverage preparation machines with suitable storage tanks are disclosed in EP 2 228 633, WO 2009/074550, WO 2010/046442, WO 2010/128109, WO 2011/083103, WO 2011/089210, WO 2011/144723, WO 2012/055767 and WO 2013/104643, which are hereby incorporated.

The sensor arrangement may include a low level sensor for detecting a low level of liquid in the tank to generate a triggering signal for switching the valve arrangement to the open configuration so as to fill the tank with liquid delivered by the outlet. The control unit can be arranged to switch the valve arrangement into the closed configuration:
- when a predetermined period of time has lapsed after switching the valve arrangement into the open configuration, the predetermined period of time being optionally user-adjustable, e.g. to adjust to a flow rate of liquid supplied from said external delivery system and/or to adjust to a maximum storage volume of the tank; and/or
- when a further level sensor detecting an overfill level above the high level generates a triggering signal for switching the valve arrangement or when a predetermined volume of liquid measured by a further sensor connected to the control unit has been delivered via the outlet, the predetermined volume being optionally user-adjustable, e.g. to adjust to a maximum storage volume of the tank.

The sensor arrangement may include a high level sensor for detecting a high level of liquid in the tank to generate a triggering signal for switching the valve arrangement to the closed configuration.

The control unit can be configured so as to intermittently read the high level sensor, e.g. at time intervals in the range of 1 to 20 or 30 min., and maintain the valve arrangement in the closed configuration as long as a high level of liquid is detected and then temporarily switch the valve arrangement into the open configuration until the high level of liquid is again detected whereby the high level sensor is read continuously or at short intervals by the control unit, such as intervals of less than 5 second e.g. intervals in the range of 0.1 to 3 seconds. The time intervals may be user-adjustable and/or set in accordance with the maximum speed for emptying the tank (the maximum rate of removal of liquid by the machine) for setting the long time intervals and/or the existence and size of available storage space above the high level and the flowrate of the liquid supplied from the external delivery system for setting the short time intervals.

The sensor arrangement can comprise a low level sensor for detecting a low level of liquid in the tank to generate a triggering signal for switching the valve arrangement to the open configuration so as to fill the tank with liquid delivered by the outlet and a high level sensor for detecting a high level of liquid in the tank to generate a triggering signal for switching the valve arrangement to the closed configuration. The control unit may also be arranged to switch the valve arrangement into the closed configuration:
- when a predetermined period of time has lapsed after switching the valve arrangement into the open configuration, the predetermined period of time being optionally user-adjustable, e.g. to adjust to a flow rate of liquid supplied from said external delivery system and/or to adjust to a maximum storage volume of the tank; and/or
- when a further sensor provides a signal to the control unit that indicates that the high level has been exceeded.

Hence, the device can be operated with a high level sensor and a low level sensor to refill the tank when empty or close to being empty and in a manner to avoid overflow.

Alternatively, the device can be operated with a single high or low level sensor to detect when the tank needs to be refilled (or not refilled) and a time measuring system (e.g. as described above) and/or flow-meter arrangement to avoid excessive filling or emptying (open loop control of the filling state of the tank).

In a safer embodiment, the device operates both with low and high level sensors on the one hand and with a time measuring system and/or flow-meter system on the other hand. Hence, an isolated failure of a sensor, a flow-meter or the time measuring system does not lead to an overflow of the tank.

Such further sensor can include: a further level sensor connected to the control unit and arranged to generate a triggering signal for switching the valve arrangement when a predetermined level above the high level is detected; and/or a flowmeter connected to the control unit and measuring a volume of liquid that is delivered via the outlet, the valve arrangement being switched into the closed configuration when the measured volume reaches a predetermined volume. For instance, the predetermined volume is user-adjustable, e.g. to adjust to a maximum storage volume of the tank.

The sensor arrangement can comprise at least one of an optical sensor, an electric sensor, e.g. a capacitive sensor, and a float sensor for sensing a float in the tank. The technical details of such sensors is well known in the field and are for instance discussed in EP 2 228 633 and US 8 387 455.

For example, the device includes a member bearing the sensor arrangement. The member can have one or more of the following features a) to d):
a) the member extends in a generally upright direction and/or in a generally horizontal direction arranged to generally match a wall of the machine, such as a peripheral wall of a tank of the machine, along (a) corresponding direction(s), when such device is fixed to the tank;
b) the member extends in a generally upright direction in a manner as to generally extend along the thank wall inside or outside a tank of the machine, when such device is fixed to the tank;
c) the member forms a wall of a body of the device;
d) the member is formed by a PCB which interfaces at least one or two sensor (s) of the sensor arrangement to the control unit.

The control unit may be connected to at least one of: a power source via a power connector, such as an electric connector (e.g. plug or socket) to the mains with a voltage transformer and/or an electric connector (e.g. plug or socket) to the beverage machine with or without a voltage transformer; and a user interface such as an interface comprising a power and/or reset switch (such as an on/off switch and/or a switch for resetting the device, e.g. after an incident) and/or a control indicator e.g. a control light. The control indicator can for instance indicate: whether the device is on or off, and/or whether the valve arrangement are in the open or the closed configuration; and/or whether the device is properly functioning or malfunctioning; and/or whether the device is in a programming mode.

The connecting device may further comprise an assembly arrangement for reversibly or irreversibly fixing the connecting device to the machine, e.g. to a tank thereof.

The connecting device is irreversibly fixed by the assembly arrangement when the disassembly requires a destruction of at least one part of the device (or the machine) or when the disassembly requires a special tool (e.g. a physical key) or knowledge (e.g. an intellectual key) possessed by specially trained maintenance personal but no by average consumers.

For instance, such device when reversibly fixed forms a user-removable accessory fixed to the tank so that the outlet is positioned for delivering liquid into the tank via an upper opening of the tank.

The connecting device may be integrated in the beverage machine in a manner not intended to be disassemblable by a user.

The connecting device may be connected to and use sensors that are integrated in the beverage machine to monitor the tank, typically of the machine tank.

The control unit of the connecting device can be integrated in the control unit of the beverage machine, the electric powering of the connecting device being optionally supplied by the beverage machine.

The assembly arrangement may include a mechanical connector, e.g. a hook, clip, snap, clamp, friction fastener, geometric connector, and/or a magnetic connector, and/or any connector that reversibly or irreversibly fixes the connecting device directly or indirectly to the machine, e.g. a machine's tank.

Hence, the connecting device may be fitted onto new or existing beverage machines (retrofitting) and does not alter the integrity of the machine. Hence, the connecting device can be removed from the machine so that beverage machine can be operated by manually refilling its tank. Alternatively, the connecting device may be fully integrated into the machine, in a manner which is not intended to be disassembled by an ordinary user.

When the connecting device is provided as a user-removable accessory, the connecting device can be fitted onto machines that can be operated without the connecting device or with the connecting device. The connecting device is provided as a separable unit that can be fitted by a user to a beverage machine having a liquid tank.

The assembly arrangement can be configured for fixing such device to the tank so that the sensor arrangement extends inside the tank via a tank opening or is located adjacent a peripheral tank wall externally to the tank. Whether extending inside or located externally to the tank, the sensor arrangement is arranged so as to generate a triggering signal when the liquid reaches a predetermined level in the tank.

The device may include a body and an overhanging arm arranged to extend over a tank opening of the tank and optionally into the tank via the opening, the overhanging arm being formed of or holding at least one of the outlet and the sensor arrangement. The overhanging arm may include a connecting portion for connecting a cover member that is configured to cover the opening of the tank. For instance, the outlet and/or the sensor arrangement extend(s) through the connecting portion or form(s) the connecting portion or is/are integral with the connecting portion and the cover member.

The device may include a cover member that is configured to close a tank opening of the tank, the cover member delimiting a passage, such as a through hole, through which the outlet extends or through which the outlet can deliver liquid into the tank. For instance, the sensor arrangement extends through the passage or through a different passage delimited by the cover member into the tank or is confined outside the tank.

The cover member can include an assembly arrangement for reversibly assembling the cover member to at least one of the tank, such as to a rim delimiting the tank opening, and/or to a main machine body of the beverage machine, e.g. by being hooked to the main machine body.

The assembling of the cover member to the storage tank and/or to machine's main machine body may be implemented in the manner by which ordinary tank covers are assembled thereto, e.g. as discussed in the references cited above.

In an embodiment, the device has a device body and an assembly arrangement for reversibly or irreversibly assembling the device body to the tank and/or to a main machine body of said beverage machine.

The assembly arrangement may include a lower assembly arrangement, such as a foot, for reversibly or irreversibly assembling the device body to a lower part of the tank and/or to a lower part of the main machine body. The lower assembly arrangement can have a platform projecting from a bottom part of the device body and/or extending under the outlet.

The assembly arrangement can have an upper assembly arrangement, such as a top, for reversibly or irreversibly assembling the device body to an upper part of the tank and/or to an upper part of the main machine body. The upper assembly arrangement may include an arm projecting from a top part of the device body and/or extending above the outlet, such as an arm forming or fixed to a cover member.

The assembly arrangement may include a first assembly arrangement, such as a lower assembly arrangement e.g. a foot extending from the device body, and a second assembly arrangement, e.g. an upper assembly arrangement such as an arm extending from the device body, which can be reversibly or irreversibly fixed to the machine, e.g. to a machine tank and/or to a main machine body, by fastening the first and second arrangements to one another.

The assembly arrangement may include any connector that reversibly or irreversibly fixes directly or indirectly the connecting device to the machine, e.g. a machine's tank and/or machine's main body, such as a mechanical or physical or chemical connector, e.g. one or more of hooks, clips, snaps, clamps, rivets, screws, nails, friction fasteners, geometric fasteners, magnetic connectors, gluing areas and welding areas.

For instance, when fixed together, the first and second arrangements:
- extend over two extremities of the machine, e.g. over the tank and/or main machine body, to form a clamp secured on the machine, e.g. on the tank and/or main machine body, said two extremities forming for instance a top and bottom part of the machine, e.g. of the tank and/or main machine body; and/or
- extend externally over and around the machine, e.g. externally over and around the tank and/or main machine body, and optionally passing through an opening of the tank and/or main machine body; and/or
- delimit between them an opening for the external system to be connected to the inlet.

In an embodiment, the device body is made of a first part and a second part. The first part comprises the first assembly arrangement and the second part comprises the second assembly arrangement. The first and second assembly arrangements are reversibly or irreversibly fixed to the machine by assembling the first and second parts together by the fixing arrangement.

For instance, at least one of the first and second parts includes an outer housing by which it is assembled to the other part, e.g. each part having an outer housing whereby the parts are assembled together via their respective outer housings. For instance, one part of the first and second parts comprises the inlet, the outlet, the valve arrangement and the control unit, optionally the inlet and/or the outlet extending through the other part of the first and second parts such as through an opening delimited by a housing of the other part e.g. an opening delimited by a housing of the first part and a housing of the second part.

Hence, the connecting device can be mounted very easily onto the machine, for instance onto the machine's tank and/or main machine body. For instance, the connecting device is mounted onto the machine as a two part arrangement and secured to the machine (e.g. tank and/or main machine body) by fastening the two parts of the connecting device together by the fixing arrangement.

The fastening of the two parts may be "accessible", i.e. easily unfastenable by a user without effort (e.g. by using a user-toggle or lock), it can be "readily accessible", i.e. unfastenable by an untrained user without damaging the connecting device (e.g. by using screws). In general, the assembly arrangement resulting from such fastening, e.g. by using a corresponding fixing arrangement, is considered to be reversibly.

When the fastening is "not accessible", the unfastening involves a destruction of at least one part of the connecting device or of the fixing arrangement or it requires a special tool or key (e.g. not widely spread) or requires a special knowledge (provided by corresponding special training) of the connecting device and its structure to know how to disassemble it. In general, the assembly arrangement resulting from such fastening, e.g. by using a corresponding fixing arrangement, is considered to be irreversibly.

The invention also relates to a combination formed of a connecting device as described above and a beverage machine. The device is arranged to connect the machine with an external liquid delivery system, e.g. a water distribution network, to supply such liquid to the machine.

The machine can have an inlet for supplying an ingredient, such as an ingredient contained in a cartridge, to be processed with the liquid in a processing and delivery unit to prepare a beverage. The inlet usually has an ingredient passage with or without a loading device for transporting the ingredient at the inlet. Examples of such arrangements are disclosed in EP EP 1447034, WO 01/84993, WO 02/078499, WO 03/056987, WO 2012/072766, WO 2012/093107, WO 2012/126971, WO 2014/056821, WO 2014/056641 and WO 2014/056642.

The machine may have an outlet for delivering a beverage from a processing and delivery unit. Any outlet is contemplated. Examples of advantageous outlets are disclosed in WO 2006/050769, WO 2011/095502, WO 2012/055765, WO 2012/072758 and WO 2013/127907.

The outlet may be located above a support for placing a user-recipient, e.g. a cup or a mug, for collecting the beverage delivered by the outlet. Suitable examples of such supports are disclosed in EP 1943931, EP 1867260, EP 2189087, EP 2189088, EP 2189089, WO 2009/074557, WO 2011/154492, WO 2012/007313 and WO 2013/104636.

The machine may have an actuator, such as a handle or a motor, for actuating the beverage processing and delivery unit for receiving in and/or evacuating from the unit an ingredient, such as an ingredient contained in a cartridge. Suitable examples of such actuators and actuated beverage processing and delivery units are disclosed in US 8272319, WO 2004/071259, WO 2005/004683, WO2007/135136, WO 2009/043630, WO 2010/015427, WO 2012/025258, WO 2012/025259, WO 2013/127476, WO 2014/056810, WO 2014/056862, WO 2014/060370, WO 2014/096122 and WO 2014/096123.

The machine can have a pump for pumping the liquid from the tank to a beverage delivery outlet. Examples of suitable pumps and/or their integration in the fluid line of beverage preparation machines are disclosed in WO 2009/024500, WO 2009/150030, WO 2010/006953, WO 2011/107574, WO 2010/108700 and WO 2013/098173.

The machine may include a mixing chamber for mixing the liquid driven by the pump with an ingredient such as an ingredient contained in a cartridge. Examples of mixing chambers can be found in the references listed in relation with the actuated beverage processing and delivery unit.

The machine may include thermal conditioner, such as a heater and/or a cooler, for thermally conditioning the liquid supplied from the tank, e.g. via a tank outlet. Examples of thermal conditioners and and/or their integration in the fluid line of beverage preparation machines are disclosed in US 8646377, WO 01/54551, WO 2004/006742, WO 2006/029763, WO 2009/092746, WO 2009/043851, WO 2009/043865 and WO 2011/157675.

The machine may include a machine control unit such as a control unit with a user-interface. Implementation examples of control units and user-interfaces in beverage preparation machines are for example disclosed in WO 2008/138710, WO 2009/043865, WO 2009/135821, WO 2010/003932, WO 2010/037806, WO 2010/046442, WO 2011/020779, WO 2011/026853, WO 2011/029813, WO 2011/144719, WO 2011/144720, WO 2012/007260, WO 2012/032019 and WO 2012/072764.

The machine can comprise an electric connector for supplying power via a power connector to the connecting device, e.g. as disclosed in WO 2009/074555.

The machine can have a liquid storage tank with an upper opening for supplying liquid into the tank, such as an opening delimited by a rim of the tank. The tank can be delimited by a bottom part and a peripheral wall extending from and above the bottom part towards the opening and/or having a tank outlet for dispensing liquid to a beverage processing and delivery unit of the machine.

The machine may have a removable tank lid for covering the tank. The tank lid may be compatible with the connecting device when the connecting device is used with the machine or the tank lid may be removed from the tank for using the connecting device. When the tank lid is removed, the connecting device may comprise a cover member that replaces the tank lid and that allows the refilling of the tank via the connecting device (usually through the cover member). The tank lid (or the device's cover member) may be secured to the machine's main body or to the tank or to both. An example of a tank lid (that can be modified for the connecting device, either as a part of the connecting device (as its cover member) or as part of the beverage machine or that can be used as such when the beverage machine is not combined with the connecting device) is taught in WO 2011/089210.

The beverage preparation machine can be an in-home or out of home machine. The machine may be for the preparation of coffee, tea, chocolate, cacao, milk, soup, baby food, etc.... The machine may be arranged for preparing within a beverage processing module a beverage by passing hot or cold water or another liquid through a cartridge containing an ingredient, such as a flavouring ingredient, of the beverage to be prepared, such as ground coffee or tea or chocolate or cacao or milk powder.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. The liquid may be supplied manually and/or via the external delivery system.

For instance, a predetermined amount of beverage is formed and dispensed on user-request, which corresponds to a serving. The volume of such a serving may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, cafe latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 150 ml per serving.

### Brief Description of the Drawings

The invention will now be described with reference to the schematic drawings, wherein:
- Figure 1 illustrates a beverage preparation machine having a tank which can be fitted with an exemplary connecting device in accordance with the invention;
- Figures 2 and 3 show a perspective view and a side view, respectively, of such a connecting device;
- Figure 4 illustrates a beverage preparation machine fitted with such a connecting device; and
- Figure 5 is a cross-sectional view of part of a beverage machine fitted with such a connecting device.

### Detailed description

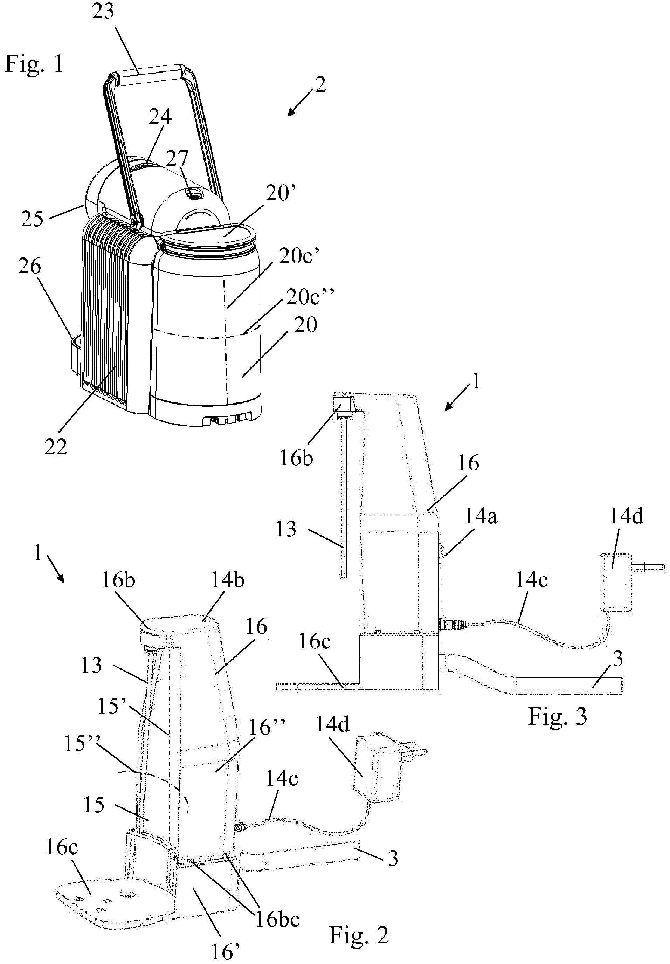

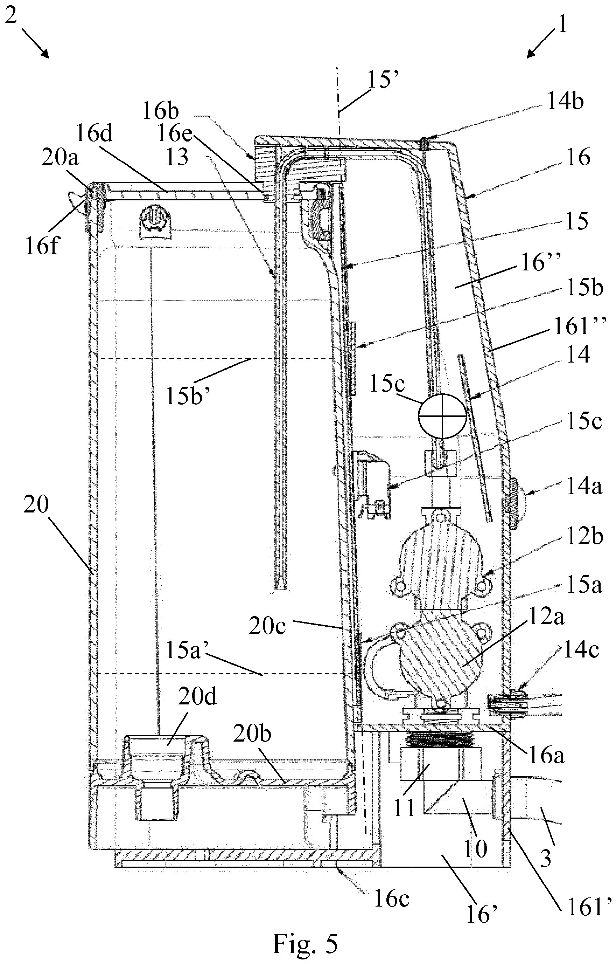

Figures 1 to 3 illustrates a beverage preparation machine 2 that can be retrofitted with a connecting device 1 shown in Figs 2 to 4 in a manner illustrated in Fig. 5.

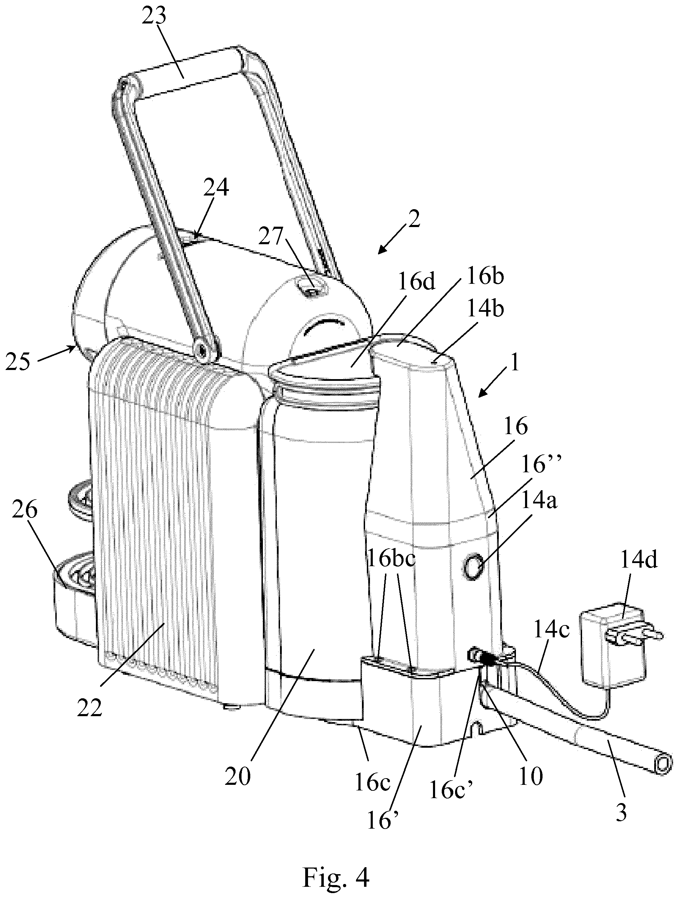

Thus an exemplary connecting device 1 is illustrated in Figs 2 and 3 for connecting a beverage machine 2 (shown in Fig. 1) with an external liquid delivery system 3, e.g. a water distribution network, to supply such liquid to said machine 2, in a manner illustrated in Figs 4 and 5.

Machine 2 can have an inlet 24 for supplying an ingredient, such as an ingredient contained in a cartridge, to be processed with said liquid in a processing and delivery unit 24,25 to prepare a beverage.

Machine 2 may include an outlet 25 for delivering a beverage from a processing and delivery unit 24,25 such as an outlet 25 located above a support 26 for placing a user-recipient, e.g. a cup or a mug, for collecting the beverage delivered by outlet 25.

Machine 2 can comprise an actuator, such as a handle 23 or a motor, for actuating a beverage processing and delivery unit 24,25 for receiving in and/or evacuating from unit 24,25 an ingredient, such as an ingredient contained in a cartridge.

Machine 2 can have a pump for pumping liquid from tank outlet 20d to a beverage delivery outlet 25, optionally via a mixing chamber for mixing said liquid with an ingredient such as an ingredient contained in a cartridge.

Machine 2 may include a thermal conditioner, such as a heater and/or a cooler, for thermally conditioning said liquid from tank outlet 20d.

Machine 2 can comprise a machine control unit such as a control unit with a user-interface 27.

Machine 2 may have an electric connector for supplying power via a power connector 14c,14d to connecting device 1.

Machine 2 can include a liquid storage tank 20 with an upper opening 20a for supplying liquid into the tank, such as an opening 20a delimited by a rim of tank 20, optionally tank 20 being delimited by a bottom part 20b and a peripheral wall 20c extending from and above bottom part 20b towards opening 20a and/or having a tank outlet 20d for dispensing liquid to a beverage processing and delivery unit 24,25 of machine 2.

Machine 2 may comprise a removable tank lid 20', such as a tank lid 20' replaceable by a cover member 16 comprised by connecting device 1.

Furthermore, tank 20 may have a (solid) tank lid 20' covering opening 20a, lid 20' being removable for filling tank 20. When connecting device 1 is fixed to tank 20, lid 20' may be removed so that opening 20a remains open or is covered by a cover member 16d that is fixed to connecting device 1 and (re-)movable en bloc with device 1. Hence, tank 20 may nevertheless remain covered when (retro-)fitted with connecting device 1.

Connecting device 1 typically has: an inlet 10 for a fluid connection to system 3; an outlet 13 for delivering liquid from external system 3 via inlet 10 to beverage machine 2; a valve arrangement 12a,12b switchable between an open configuration for establishing a fluidic connection between inlet 10 and outlet 13 and a closed configuration for interrupting the fluidic connection, such as a valve arrangement 12a,12b connected to inlet 10 via a fluid connector 11 e.g. a fluid connector 11 fixed to a frame portion 16a of a body 16 of such device 1; and a control unit 14 for switching valve arrangement 12a,12b between its open configuration and its closed configuration.

Valve arrangement 12a,12b comprises two or more valves 12a,12b that are in serial fluidic configuration between inlet 10 and outlet 13.

At least two such valves 12a,12b that are in serial fluidic configuration can be controlled in parallel by control unit 14 to be both simultaneously open for establishing the fluidic connection between inlet 10 and outlet 13 or both simultaneously closed for interrupting the fluidic connection.

At least two such valves 12a,12b that are in serial fluidic configuration can be controlled separately by control unit 14. A first valve 12a (e.g. a main valve or a control valve) of such valves 12a,12b can be opened or closed for establishing or interrupting the fluidic connection between inlet 10 and outlet 13 as required for supplying liquid to machine. A second valve 12b (e.g. a back-up or safety valve) of such valves 12a,12b is typically open as long as first valve 12a opens and closes as controlled by control unit 14 and is closed when first valve 12a is malfunctioning. At least one sensor 15c, e.g. a flowmeter and/or an overfill level sensor, can be connected to control unit 14 for sensing an on-going flow of liquid via inlet 10 and outlet 13 after control unit 14 has attempted to switch first valve 12a into its closed configuration and for triggering control unit 14 to switch second valve 12b into its closed configuration.

Control unit 14 can be arranged to detect a malfunctioning of at least one valve 12a,12b to then indicate to a user such malfunctioning via an indicator 14b and/or block the non-malfunctioning valve in its closed configuration with or without automatically switching-off such device 1.

Device 1 may include a sensor arrangement 15a,15b connected to control unit 14 that is configured to switch valve arrangement 12a,12b in response to a triggering signal from sensor arrangement 15a,15b.

Outlet 13 can be configured to deliver liquid from external system 3 into a tank 20 of machine 2 or of such connecting device 1.

Sensor arrangement 15a,15b may include a low level sensor 15a for detecting a low level 15a' of liquid in tank 20 to generate a triggering signal for switching valve arrangement 12a,12b to the open configuration so as to fill tank 20 with liquid delivered by outlet 13. For instance, control unit 14 is arranged to switch valve arrangement 12a,12b into the closed configuration:
- when a predetermined period of time has lapsed after switching valve arrangement 12a,12b into the open configuration, the predetermined period of time being optionally user-adjustable, e.g. to adjust to a flow rate of liquid supplied from external delivery system 3 and/or to adjust to a maximum storage volume of tank 20; and/or
- when a further level sensor detecting an overfill level above high level 15b' generates a triggering signal for switching the valve arrangement or when a predetermined volume of liquid measured by a further sensor 15c connected to control unit 14 has been delivered via outlet 13, the predetermined volume being optionally user-adjustable, e.g. to adjust to a maximum storage volume of tank 20.

Sensor arrangement 15a,15b can have a high level sensor 15b for detecting a high level 15b' of liquid in tank 20 to generate a triggering signal for switching valve arrangement 12a,12b to the closed configuration. For instance, control unit 14 is configured so as to intermittently read high level sensor 15b, e.g. at time intervals in the range of 1 to 20 or 30 min., and maintain valve arrangement 12a,12b in the closed configuration as long as a high level 15b' of liquid is detected and then temporarily switch valve arrangement 12a,12b into the open configuration until high level 15b' of liquid is again detected whereby high level sensor 15b is read continuously or at short intervals by control unit 14, such as intervals of less than 5 second e.g. intervals in the range of 0.1 to 3 seconds.

Sensor arrangement 15a,15b may comprise a low level sensor 15a for detecting a low level 15a' of liquid in tank 20 to generate a triggering signal for switching valve arrangement 12a,12b to the open configuration so as to fill tank 20 with liquid delivered by outlet 13 and a high level sensor 15b for detecting a high level 15b' of liquid in tank 20 to generate a triggering signal for switching valve arrangement 12a,12b to the closed configuration. For instance, control unit 14 is arranged to switch valve arrangement 12a,12b into the closed configuration:
- when a predetermined period of time has lapsed after switching valve arrangement 12a,12b into the open configuration, the predetermined period of time being optionally user-adjustable, e.g. to adjust to a flow rate of liquid supplied from external delivery system 3 and/or to adjust to a maximum storage volume of tank 20; and/or
- when a further sensor 15c provides a signal to control unit 14 that indicates that high level 15b' has been exceeded.

Further sensor 15c can include a further level sensor connected to control unit 14 and arranged to generate a triggering signal for switching the valve arrangement when a predetermined level above high level 15b' is detected.

Further sensor 15c can comprise a flowmeter 15c connected to control unit 14 and measuring a volume of liquid that is delivered via outlet 13, the valve arrangement being switched into the closed configuration when the measured volume reaches a predetermined volume, the predetermined volume being optionally user-adjustable, e.g. to adjust to a maximum storage volume of tank 20.

Sensor arrangement 15a,15b may include at least one of an optical sensor, an electric sensor, e.g. a capacitive sensor, and a float sensor for sensing a float in tank 20.

Device 1 can have a member 15 bearing sensor arrangement 15a,15.

Member 15 may extend in a generally upright direction 15' and/or in a generally horizontal direction 15" arranged to generally match a wall 20c of machine 2, such as a peripheral wall 20c of tank 20 of machine 2, along (a) corresponding direction(s) 20c',20c", when such device 1 is fixed to tank 20.

Member 15 can extend in a generally upright direction in a manner as to generally extend along thank wall 20c inside or outside tank 20 of machine 2, when such device 1 is fixed to tank 20.

Member 15 may form a wall 15 of a body 16 of connecting device 1.

Member 15 can be formed by a PCB which interfaces at least one or two sensor(s) 15a,15b of sensor arrangement 15a,15b to control unit 14.

Typically, control unit 14 is connected to at least one of: a power source via a power connector 14c,14d; and a user interface 14a,14b such as an interface comprising a and/or reset switch 14a (e.g. an on/off switch and/or a switch for resetting device 1) 14a and/or a control indicator e.g. a control light 14b. The power source may be provided by beverage preparation machine 2 itself or may be external to device 1 and to machine 2, for instance the mains. Power connector 14c,14d may include an electric cable 14c and a plug 14d. Power connector 14c,14d may include a voltage transformer, e.g. within plug 14d or on control unit 14.

Device 1 may include an assembly arrangement 16c,16d for reversibly or irreversibly fixing connecting device 1 to machine 2, e.g. to a tank 20 thereof. For instance, such device 1 forms a user-removable accessory 1 fixed to tank 20 so that outlet 13 is positioned for delivering liquid into tank 20 via an upper opening 20a of tank 20. Assembly arrangement 16c,16d can be configured for fixing such device 1 to tank 20 so that sensor arrangement 15a,15b extends inside tank 20 via a tank opening 20a or is located adjacent a peripheral tank wall 20c externally to the tank 20, so as to generate a triggering signal when the liquid reaches a predetermined level 15a',15b' in tank 20.

The connecting device may be connected to and use sensors that are integrated in the beverage machine to monitor the tank.

Device 1 can have a body 16 and an overhanging arm 16b arranged to extend over a tank opening 20a of tank 20 and optionally into tank 20 via opening 20a, overhanging arm 16 being formed of or holding at least one of outlet 13 and the sensor arrangement.

Overhanging arm 16b may include a connecting portion 16e for connecting a cover member 16d that is configured to cover opening 20a of tank 20. For instance, outlet 13 and/or sensor arrangement extends through connecting portion 16e or forms connecting portion or is integral with the connecting portion and cover member 16d.

Device 1 can comprise a cover member 16d that is configured to close a tank opening 20a of tank 20, cover member 16d delimiting a passage 16e, such as a through hole, through which outlet 13 extends or through which outlet can deliver liquid into tank 20. Optionally sensor arrangement 15a,15b extends through this passage or through a different passage delimited by cover member into the tank or is confined outside tank 20.

Cover member 16d may include an assembly arrangement 16f for reversibly assembling cover member 16d to at least one of tank 20, such as to a rim delimiting tank opening 20a, and/or to a main machine body 22 of beverage machine 2 e.g. by being hooked to main machine body 22.

Device 1 can have a device body 16 and an assembly arrangement 16c;16b,16d,16e,16f for reversibly or irreversibly assembling device body 16 to tank 20 and/or to a main machine body 22 of beverage machine 2.

The assembly arrangement can include a lower assembly arrangement 16c, such as a foot, for reversibly or irreversibly assembling the device body 16 to a lower part 20b of tank 20 and/or to a lower part of main machine body 22. For instance, lower assembly arrangement 16c has a platform projecting from a bottom part of device body 16 and/or extends under outlet 13.

The assembly arrangement may have an upper assembly arrangement 16b,16d,16e,16f, such as a top, for reversibly or irreversibly assembling device body 16 to an upper part 20a of tank 20 and/or to an upper part of main machine body 22. For example, upper assembly arrangement 16b,16d,16e,16f includes an arm 16b projecting from a top part of device body 16 and/or extending above outlet 13, such as an arm forming or fixed to a cover member 20d.

The assembly arrangement may comprise a first assembly arrangement 16c, such as a lower assembly arrangement e.g. a foot, and a second assembly arrangement 16b,16d,16e,16f, e.g. an upper assembly arrangement, which can be reversibly or irreversibly fixed to machine 2, e.g. to tank 20, by fastening first and second arrangements 16b,16c,16d,16e,16f to one another by a fixing arrangement 16bc. Fixing arrangement 16bc may include any connector that reversibly or irreversibly fixes directly or indirectly connecting device 1 to machine 2, e.g. a machine's tank 20 and/or machine's main body 22, such as a mechanical or physical or chemical connector, e.g. one or more of hooks, clips, snaps, clamps, rivets, screws, nails, friction fasteners, geometric fasteners, magnetic connectors, gluing areas and welding areas. For instance, when fixed together, first and second arrangements 16b,16c,16d,16e,16f:
- extend over two extremities of machine 2, e.g. over a machine tank 20 and/or main machine body 22, to form a clamp secured on machine 2, e.g. on tank 20 and/or main machine body 22, said two extremities forming for instance a top and bottom part of machine 2, e.g. of tank 20 and/or main machine body 22; and/or
- extend externally over and around machine 2, e.g. externally over and around tank 20 and/or main machine body 22, and optionally passing through an opening 20a of tank 20 and/or main machine body 22; and/or
- delimit between them an opening 16c' for external system 3 to be connected to inlet 10.

Device body 16 can be made of a first part 16' and a second part 16", first part 16' comprising first assembly arrangement 16c and second part 16" comprising second assembly arrangement 16b,16d,16e,16f, first and second assembly arrangements 16c;16b,16d,16e,16f being reversibly or irreversibly fixed to machine 2 by assembling first and second parts 16',16" together by fixing arrangement 16bc.

At least one of first and second parts 16',16" may include an outer housing 161',161" by which it is assembled to the other part. For instance each part 16',16" has an outer housing 161',161" whereby parts 16',16" are assembled together via their respective outer housings 161',161".

One part 16" of first and second parts 16',16" can comprise inlet 10, outlet 13, valve arrangement 12a,12b and control unit 14. For instance, inlet 10 and/or outlet 13 extend(s) through the other part 16' of first and second parts 16',16" such as through an opening 16c' delimited by a housing 161' of other part 16', e.g. an opening delimited by a housing 161' of first part 16' and a housing of the second part 16".

## Claims

1. A connecting device (1) for connecting a beverage machine (2) with an external liquid delivery system (3), e.g. a water distribution network, to supply such liquid to said machine (2), said connecting device (1) having:
- an inlet (10) for a fluid connection to said external system (3);
- an outlet (13) for delivering liquid from said external system (3) via the inlet (10) to said beverage machine (2);
- a valve arrangement (12a,12b) switchable between an open configuration for establishing a fluidic connection between the inlet (10) and the outlet (13) and a closed configuration for interrupting the fluidic connection, such as a valve arrangement (12a,12b) connected to the inlet (10) via a fluid connector (11) e.g. a fluid connector (11) fixed to a frame portion (16a) of a body (16) of such device (1); and
- a control unit (14) for switching the valve arrangement (12a,12b) between its open configuration and its closed configuration,
**characterised in that** the valve arrangement (12a,12b) comprises two or more valves (12a,12b) that are in serial fluidic configuration between the inlet (10) and the outlet (13), at least two such valves (12a,12b) that are in serial fluidic configuration being controlled by the control unit (14):
- in parallel to be both simultaneously open for establishing the fluidic connection between the inlet (10) and the outlet (13) or both simultaneously closed for interrupting the fluidic connection; or
- separately so that a first valve (12a) of such valves (12a,12b) is open or closed for establishing or interrupting the fluidic connection between the inlet (10) and the outlet (13) as required for supplying liquid to said machine and so that a second valve (12b) of such valves (12a,12b) is open as long as the first valve (12a) opens and closes as controlled by the control unit (14) and is closed when the first valve (12a) is malfunctioning, optionally at least one sensor (15c), e.g. a flowmeter and/or an overfill level sensor, being connected to the control unit (14) for sensing an on-going flow of liquid via the inlet (10) and the outlet (13) after the control unit (14) has attempted to switch the first valve (12a) into its closed configuration and for triggering the control unit (14) to switch the second valve (12b) into its closed configuration,
optionally the control unit (14) being arranged to detect a malfunctioning of at least one valve (12a,12b) to then indicate to a user such malfunctioning via an indicator (14b) and/or block the non-malfunctioning valve in its closed configuration with or without automatically switching-off such device (1).

2. The device of claim 1, which comprises a sensor arrangement (15a,15b) connected to the control unit (14) that is configured to switch the valve arrangement (12a,12b) in response to a triggering signal from the sensor arrangement (15a,15b).

3. The device of claim 2, wherein the outlet (13) is configured to deliver liquid from said external system (3) into a tank (20) of said machine (2) or of such connecting device (1), the sensor arrangement (15a,15b) comprising:
- a low level sensor (15a) for detecting a low level (15a') of liquid in said tank (20) to generate a triggering signal for switching the valve arrangement (12a,12b) to the open configuration so as to fill said tank (20) with liquid delivered by the outlet (13), the control unit (14) being optionally arranged to switch the valve arrangement (12a,12b) into the closed configuration:
- when a predetermined period of time has lapsed after switching the valve arrangement (12a,12b) into the open configuration, the predetermined period of time being optionally user-adjustable, e.g. to adjust to a flow rate of liquid supplied from said external delivery system (3) and/or to adjust to a maximum storage volume of said tank (20) ;
and/or
- when a further level sensor detecting an overfill level above the high level (15b') generates a triggering signal for switching the valve arrangement or when a predetermined volume of liquid measured by a further sensor (15c) connected to the control unit (14) has been delivered via the outlet (13), the predetermined volume being optionally user-adjustable, e.g. to adjust to a maximum storage volume of said tank (20);
or
- a high level sensor (15b) for detecting a high level (15b') of liquid in said tank (20) to generate a triggering signal for switching the valve arrangement (12a,12b) to the closed configuration, optionally the control unit (14) being configured so as to intermittently read the high level sensor (15b), e.g. at time intervals in the range of 1 to 20 or 30 min., and maintain the valve arrangement (12a,12b) in the closed configuration as long as a high level (15b') of liquid is detected and then temporarily switch the valve arrangement (12a,12b) into the open configuration until the high level (15b') of liquid is again detected whereby the high level sensor (15b) is read continuously or at short intervals by the control unit (14), such as intervals of less than 5 second e.g. intervals in the range of 0.1 to 3 seconds;
or
- a low level sensor (15a) for detecting a low level (15a') of liquid in said tank (20) to generate a triggering signal for switching the valve arrangement (12a,12b) to the open configuration so as to fill said tank (20) with liquid delivered by the outlet (13) and a high level sensor (15b) for detecting a high level (15b') of liquid in said tank (20) to generate a triggering signal for switching the valve arrangement (12a,12b) to the closed configuration, optionally the control unit (14) being also arranged to switch the valve arrangement (12a,12b) into the closed configuration:
- when a predetermined period of time has lapsed after switching the valve arrangement (12a,12b) into the open configuration, the predetermined period of time being optionally user-adjustable, e.g. to adjust to a flow rate of liquid supplied from said external delivery system (3) and/or to adjust to a maximum storage volume of said tank (20); and/or
- when a further sensor (15c) provides a signal to the control unit (14) that indicates that the high level (15b') has been exceeded.

4. The device of claim 3, wherein said further sensor (15c) comprises:
- a further level sensor connected to the control unit (14) and arranged to generate a triggering signal for switching the valve arrangement when a predetermined level above the high level (15b') is detected; and/or
- a flowmeter (15c) connected to the control unit (14) and measuring a volume of liquid that is delivered via the outlet (13), the valve arrangement being switched into the closed configuration when the measured volume reaches a predetermined volume, the predetermined volume being optionally user-adjustable, e.g. to adjust to a maximum storage volume of said tank (20).

5. The device of claim 3 or 4, wherein the sensor arrangement (15a,15b) comprises at least one of an optical sensor, an electric sensor, e.g. a capacitive sensor, and a float sensor for sensing a float in said tank (20).

6. The device of any one of claims 2 to 5, which comprises a member (15) bearing the sensor arrangement (15a,15b), optionally the member (15) having one or more of the following features a) to d):
a) the member (15) extends in a generally upright direction (15') and/or in a generally horizontal direction (15") arranged to generally match a wall (20c) of the machine (2), such as a peripheral wall (20c) of a tank (20) of said machine (2), along (a) corresponding direction(s) (20c',20c"), when such device (1) is fixed to said tank (20);
b) the member (15) extends in a generally upright direction in a manner as to generally extend along the thank wall (20c) inside or outside a tank (20) of said machine, when such device (1) is fixed to the tank (20) ;
c) the member (15) forms a wall (15) of a body (16) of said device (1);
d) the member (15) is formed by a PCB which interfaces at least one or two sensor (s) (15a,15b) of the sensor arrangement (15a,15b) to the control unit (14).

7. The device of any preceding claim, wherein the control unit (14) is connected to at least one of: a power source via a power connector (14c,14d); and a user interface (14a,14b) such as an interface comprising a power and/or reset switch (14a) and/or a control indicator e.g. a control light (14b).

8. The device of any preceding claim, which further comprises an assembly arrangement (16c,16d) for reversibly or irreversibly fixing said connecting device (1) to said machine (2), e.g. to a tank (20) thereof, optionally such device (1) forming a user-removable accessory (1) fixed to said tank (20) so that the outlet (13) is positioned for delivering liquid into said tank (20) via an upper opening (20a) of said tank (20).

9. The device of claim 8, wherein the assembly arrangement (16c,16d) is configured for fixing such device (1) to said tank (20) so that the sensor arrangement (15a,15b) extends inside the tank (20) via a tank opening (20a) or is located adjacent a peripheral tank wall (20c) externally to the tank (20), so as to generate a triggering signal when the liquid reaches a predetermined level (15a',15b') in the tank (20).

10. The device of claim 8 or 9, which comprises a body (16) and an overhanging arm (16b) arranged to extend over a tank opening (20a) of said tank (20) and optionally into the tank (20) via the opening (20a), the overhanging arm (16) being formed of or holding at least one of the outlet (13) and the sensor arrangement.

11. The device of claim 10, wherein the overhanging arm (16b) comprises a connecting portion (16e) for connecting a cover member (16d) that is configured to cover the opening (20a) of said tank (20), optionally the outlet (13) and/or the sensor arrangement extending through the connecting portion (16e) or forming the connecting portion or being integral with the connecting portion and the cover member (16d).

12. The device of any one of claims 8 to 11, which comprises a cover member (16d) that is configured to close a tank opening (20a) of said tank (20), the cover member (16d) delimiting a passage (16e), such as a through hole, through which the outlet (13) extends or through which the outlet can deliver liquid into said tank (20), optionally the sensor arrangement (15a,15b) extending through said passage or through a different passage delimited by the cover member into said tank or being confined outside the tank (20).

13. The device of claim 11 or 12, wherein the cover member (16d) comprises an assembly arrangement (16f) for reversibly assembling the cover member (16d) to at least one of said tank (20), such as to a rim delimiting the tank opening (20a), and/or to a main machine body (22) of said beverage machine (2) e.g. by being hooked to the main machine body (22).

14. The device of any one of claims 8 to 13, which has a device body (16) and an assembly arrangement (16c;16b,16d,16e,16f) for reversibly or irreversibly assembling the device body (16) to said tank (20) and/or to a main machine body (22) of said beverage machine (2), such as:
- a lower assembly arrangement (16c), such as a foot, for reversibly or irreversibly assembling the device body (16) to a lower part (20b) of the tank (20) and/or to a lower part of the main machine body (22), optionally the lower assembly arrangement (16c) comprising a platform projecting from a bottom part of the device body (16) and/or extending under the outlet (13); and/or
- an upper assembly arrangement (16b,16d,16e,16f), such as a top, for reversibly or irreversibly assembling the device body (16) to an upper part (20a) of the tank (20) and/or to an upper part of the main machine body (22), optionally the upper assembly arrangement (16b,16d,16e,16f) comprising an arm (16b) projecting from a top part of the device body (16) and/or extending above the outlet (13), such as an arm forming or fixed to a cover member (20d); and/or
- a first assembly arrangement (16c), such as a lower assembly arrangement e.g. a foot, and a second assembly arrangement (16b,16d,16e,16f), e.g. an upper assembly arrangement, which can be reversibly or irreversibly fixed to said machine (2), e.g. to said tank (20) and/or main machine body (22), by fastening the first and second arrangements (16b,16c,16d,16e,16f) to one another by a fixing arrangement (16bc) that may include any connector that reversibly or irreversibly fixes directly or indirectly such connecting device (1) to said machine (2), e.g. a machine's tank (20) and/or machine's main body (22), such as a mechanical or physical or chemical connector, e.g. one or more of hooks, clips, snaps, clamps, rivets, screws, nails, friction fasteners, geometric fasteners, magnetic connectors, gluing areas and welding areas, optionally when fixed together the first and second arrangements (16b, 16c, 16d, 16e, 16f) :
- extending over two extremities of said machine (2), e.g. over said tank (20) and/or main machine body (22), to form a clamp secured on said machine (2), e.g. on said tank (20) and/or main machine body (22), said two extremities forming for instance a top and bottom part of said machine (2), e.g. of said tank (20) and/or main machine body (22); and/or
- extending externally over and around said machine (2), e.g. externally over and around said tank (20) and/or main machine body (22), and optionally passing through an opening (20a) of said tank (20) and/or main machine body (22); and/or
- delimiting between them an opening (16c') for said external system (3) to be connected to the inlet (10).

15. A beverage machine (2) comprising a connecting device (1) as defined in any preceding claim, the device (1) being arranged to connect the machine (2) with an external liquid delivery system (3), e.g. a water distribution network, to supply such liquid to said machine (2), optionally the machine having one or more of:
- an inlet (24) for supplying an ingredient, such as an ingredient contained in a cartridge, to be processed with said liquid in a processing and delivery unit (24,25) to prepare a beverage;
- an outlet (25) for delivering a beverage from a processing and delivery unit (24,25) such as an outlet (25) located above a support (26) for placing a user-recipient, e.g. a cup or a mug, for collecting the beverage delivered by the outlet (25);
- an actuator, such as a handle (23) or a motor, for actuating a beverage processing and delivery unit (24,25) for receiving in and/or evacuating from the unit (24,25) an ingredient, such as an ingredient contained in a cartridge;
- a pump for pumping said liquid from the tank outlet (20d) to a beverage delivery outlet (25), optionally via a mixing chamber for mixing said liquid with an ingredient such as an ingredient contained in a cartridge;
- a thermal conditioner, such as a heater and/or a cooler, for thermally conditioning said liquid from the tank outlet (20d);
- a machine control unit such as a control unit with a user-interface (27);
- an electric connector for supplying power via a power connector (14c,14d) to the connecting device (1);
- a liquid storage tank (20) with an upper opening (20a) for supplying liquid into the tank, such as an opening (20a) delimited by a rim of the tank (20), optionally said tank (20) being delimited by a bottom part (20b) and a peripheral wall (20c) extending from and above the bottom part (20b) towards the opening (20a) and/or having a tank outlet (20d) for dispensing liquid to a beverage processing and delivery unit (24,25) of the machine (2); and
- a removable tank lid (20'), such as a tank lid (20') replaceable by a cover member (16) comprised by the connecting device (1).

## Patentansprüche

1. Verbindungsvorrichtung (1) zum Verbinden einer Getränkemaschine (2) mit einem externen Flüssigkeitsabgabesystem (3), zum Beispiel einem Wasserverteilungsnetz, um die Flüssigkeit der Maschine (2) zuzuführen, wobei die Verbindungsvorrichtung (1) aufweist:
- einen Einlass (10) für eine Fluidverbindung zu dem externen System (3);
- einen Auslass (13) zum Abgeben von Flüssigkeit aus dem externen System (3) über den Einlass (10) an die Getränkemaschine (2);
- eine Ventilanordnung (12a, 12b), die zwischen einer offenen Konfiguration zum Herstellen einer Fluidverbindung zwischen dem Einlass (10) und dem Auslass (13) und einer geschlossenen Konfiguration zum Unterbrechen der Fluidverbindung umschaltbar ist, wie etwa eine Ventilanordnung (12a, 12b), die mit dem Einlass (10) über einen Fluidverbinder (11) verbunden ist, z. B. einen Fluidverbinder (11), der an einem Rahmenabschnitt (16a) eines Körpers (16) der Vorrichtung (1) fixiert ist; und
- eine Steuereinheit (14) zum Umschalten der Ventilanordnung (12a, 12b) zwischen ihrer offenen Konfiguration und ihrer geschlossenen Konfiguration,
**dadurch gekennzeichnet, dass** die Ventilanordnung (12b, 12a) zwei oder mehrere Ventile (12b, 12a) umfasst, die sich in einer Reihenfluidkonfiguration zwischen dem Einlass (10) und dem Auslass (13) befinden, wobei mindestens zwei Ventile (12b, 12a), die sich in Reihenfluidkonfiguration befinden, durch die Steuereinheit (14) gesteuert werden:
- parallel, sodass sie beide gleichzeitig offen sind, um die Fluidverbindung zwischen dem Einlass (10) und dem Auslass (13) herzustellen, oder beide gleichzeitig geschlossen sind, um die Fluidverbindung zu unterbrechen; oder
- separat, sodass ein erstes Ventil (12a) der Ventile (12a, 12b) offen oder geschlossen ist, um die Fluidverbindung zwischen dem Einlass (10) und dem Auslass (13) herzustellen oder zu unterbrechen, wie es zum Zuführen von Flüssigkeit zu der Maschine erforderlich ist, und sodass ein zweites Ventil (12b) der Ventile (12a, 12b) offen ist, solange sich das erste Ventil (12a) öffnet und schließt, wenn es durch die Steuereinheit (14) gesteuert wird, und geschlossen ist, wenn das erste Ventil (12a) nicht richtig funktioniert, wobei wahlweise mindestens ein Sensor (15c), z. B. ein Durchflussmesser und/oder ein Überfüllungspegelsensor, mit der Steuereinheit (14) verbunden ist, um ein im Gange befindliches Fließen von Flüssigkeit über den Einlass (10) und den Auslass (13) zu erfassen, nachdem die Steuereinheit (14) versucht hat, das erste Ventil (12a) in seine geschlossene Konfiguration umzuschalten, und um auszulösen, dass die Steuereinheit (14) das zweite Ventil (12b) in seine geschlossene Konfiguration umschaltet,
wobei die Steuereinheit (14) wahlweise dazu eingerichtet ist, eine Störung von mindestens einem Ventil (12a, 12b) zu erkennen, um die Störung dann einem Benutzer über eine Anzeige (14b) anzuzeigen und/oder das nicht gestörte Ventil mit oder ohne automatisches Ausschalten der Vorrichtung (1) in seiner geschlossenen Konfiguration zu blockieren.

2. Vorrichtung nach Anspruch 1, die eine Sensoranordnung (15a, 15b) umfasst, die mit der Steuereinheit (14) verbunden ist, die dazu konfiguriert ist, die Ventilanordnung (12a, 12b) als Reaktion auf ein Auslösesignal von der Sensoranordnung (15a, 15b) umzuschalten.

3. Vorrichtung nach Anspruch 2, wobei der Auslass (13) dazu konfiguriert ist, Flüssigkeit von dem externen System (3) in einen Tank (20) der Maschine (2) oder der Verbindungsvorrichtung (1) abzugeben, wobei die Sensoranordnung (15a, 15b) umfasst:
- einen Niedrigpegelsensor (15a) zum Erkennen eines niedrigen Pegels (15a') an Flüssigkeit in dem Tank (20), um ein Auslösesignal zum Umschalten der Ventilanordnung (12a, 12b) in die offene Konfiguration zu erzeugen, um so den Tank (20) mit Flüssigkeit, die durch den Auslass (13) abgegeben wird, zu füllen, wobei die Steuereinheit (14) wahlweise dazu eingerichtet ist, die Ventilanordnung (12a, 12b) in die geschlossene Konfiguration umzuschalten:
- wenn eine vorbestimmte Zeitdauer nach einem Umschalten der Ventilanordnung (12a, 12b) in die offene Konfiguration abgelaufen ist, wobei die vorbestimmte Zeitdauer wahlweise von einem Benutzer einstellbar ist, um z. B. eine Flussrate von Flüssigkeit, die von dem externen Abgabesystem (3) zugeführt wird, einzustellen und/oder um ein maximales Speichervolumen des Tanks (20) einzustellen;
und/oder
- wenn ein weiterer Pegelsensor, der einen Überfüllungspegel über dem hohen Pegel (15b') erkennt, ein Auslösesignal zum Umschalten der Ventilanordnung erzeugt, oder wenn ein vorbestimmtes Volumen an Flüssigkeit, das durch einen weiteren Sensor (15c), der mit der Steuereinheit (14) verbunden ist, gemessen wurde, über den Auslass (13) abgegeben wurde, wobei das vorbestimmte Volumen wahlweise von einem Benutzer einstellbar ist, um z. B. ein maximales Speichervolumen des Tanks (20) einzustellen;
oder
- einen Hochpegelsensor (15b) zum Erkennen eines hohen Pegels (15b') an Flüssigkeit in dem Tank (20), um ein Auslösesignal zum Umschalten der Ventilanordnung (12a, 12b) in die geschlossene Konfiguration zu erzeugen, wobei die Steuereinheit (14) wahlweise dazu konfiguriert ist, den Hochpegelsensor (15b) intermittierend zu lesen, z. B. in Zeitintervallen in dem Bereich von 1 bis 20 oder 30 min, und die Ventilanordnung (12b, 12a) so lange in der geschlossenen Konfiguration zu halten, wie ein hoher Pegel (15b') an Flüssigkeit erkannt wird, und dann die Ventilanordnung (12b, 12a) vorübergehend in die offene Konfiguration umzuschalten, bis der hohe Pegel (15b') an Flüssigkeit wieder erkannt wird, wobei der Hochpegelsensor (15b) ununterbrochen oder in kurzen Intervallen durch die Steuereinheit (14) gelesen wird, wie etwa in Intervallen von weniger als 5 Sekunden, z. B. Intervallen in dem Bereich von 0,1 bis 3 Sekunden;
oder
- einen Niedrigpegelsensor (15a) zum Erkennen eines niedrigen Pegels (15a') an Flüssigkeit in dem Tank (20), um ein Auslösesignal zum Umschalten der Ventilanordnung (12a, 12b) in die offene Konfiguration zu erzeugen, um so den Tank (20) mit Flüssigkeit, die durch den Auslass (13) abgegeben wird, zu füllen, und einen Hochpegelsensor (15b) zum Erkennen eines hohen Pegels (15b') an Flüssigkeit in dem Tank (20), um ein Auslösesignal zum Umschalten der Ventilanordnung (12a, 12b) in die geschlossene Konfiguration zu erzeugen, wobei die Steuereinheit (14) wahlweise auch dazu eingerichtet ist, die Ventilanordnung (12a, 12b) in die geschlossene Konfiguration umzuschalten:
- wenn eine vorbestimmte Zeitdauer nach einem Umschalten der Ventilanordnung (12a, 12b) in die offene Konfiguration abgelaufen ist, wobei die vorbestimmte Zeitdauer wahlweise von einem Benutzer einstellbar ist, um z. B. eine Flussrate von Flüssigkeit, die von dem externen Abgabesystem (3) zugeführt wird, einzustellen und/oder um ein maximales Speichervolumen des Tanks (20) einzustellen; und/oder
- wenn ein weiterer Sensor (15c) ein Signal an die Steuereinheit (14) bereitstellt, das anzeigt, dass der hohe Pegel (15b') überschritten wurde.

4. Vorrichtung nach Anspruch 3, wobei der weitere Sensor (15c) umfasst:
- einen weiteren Pegelsensor, der mit der Steuereinheit (14) verbunden ist und angeordnet ist, um ein Auslösesignal zum Umschalten der Ventilanordnung zu erzeugen, wenn ein vorbestimmter Pegel oberhalb des hohen Pegels (15b') erkannt wird; und/oder
- einen Durchflussmesser (15c), der mit der Steuereinheit (14) verbunden ist und ein Volumen an Flüssigkeit misst, das über den Auslass (13) abgegeben wird, wobei die Ventilanordnung in die geschlossene Konfiguration umgeschaltet wird, wenn das gemessene Volumen ein vorbestimmtes Volumen erreicht, wobei das vorbestimmte Volumen wahlweise von einem Benutzer einstellbar ist, um z. B. ein maximales Speichervolumen des Tanks (20) einzustellen.

5. Vorrichtung nach Anspruch 3 oder 4, wobei die Sensoranordnung (15a, 15b) mindestens einen von einem optischen Sensor, einem elektrischen Sensor, z. B. einem kapazitiven Sensor, und einem Schwimmsensor zum Erfassen eines Schwimmers in dem Tank (20) umfasst.

6. Vorrichtung nach einem der Ansprüche 2 bis 5, die ein Element (15) umfasst, das die Sensoranordnung (15a, 15b) trägt, wobei das Element (15) wahlweise eines oder mehrere der folgenden Merkmale a) bis d) aufweist:
a) das Element (15) erstreckt sich in einer in Allgemeinen senkrechten Richtung (15') und/oder in einer im Allgemeinen horizontalen Richtung (15"), die dazu eingerichtet ist, im Allgemeinen zu einer Wand (20c) der Maschine (2), wie etwa einer Umfangswand (20c) eines Tanks (20) der Maschine (2), entlang (einer) entsprechenden Richtung(en) (20c', 20c") zu passen, wenn die Vorrichtung (1) an dem Tank (20) fixiert ist;
b) das Element (15) erstreckt sich in einer im Allgemeinen senkrechten Richtung, sodass es sich im Allgemeinen entlang der Tankwand (20c) innerhalb oder außerhalb eines Tanks (20) der Maschine erstreckt, wenn die Vorrichtung (1) an dem Tank (20) fixiert ist;
c) das Element (15) bildet eine Wand (15) eines Körpers (16) der Vorrichtung (1);
d) das Element (15) ist durch eine PCB gebildet, die eine Schnittstelle der Steuereinheit (14) mit mindestens einem oder zwei Sensor(en) (15a, 15b) der Sensoranordnung (15a, 15b) bildet.

7. Vorrichtung nach einem der vorstehenden Ansprüche, wobei die Steuereinheit (14) mit mindestens einem verbunden ist von: einer Stromquelle über einen Stromverbinder (14c, 14d); und einer Benutzerschnittstelle (14a, 14b), wie etwa einer Schnittstelle, umfassend einen Leistungs- und/oder Rücksetzschalter (14a) und/oder einen Steuerindikator, z. B. eine Steuerleuchte (14b).

8. Vorrichtung nach einem der vorstehenden Ansprüche, die ferner eine Montageanordnung (16c, 16d) zum reversiblen oder irreversiblen Fixieren der Verbindungsvorrichtung (1) an der Maschine (2), z. B. an einem Tank (20) davon, umfasst, wobei die Vorrichtung (1) wahlweise ein von einem Benutzer entfernbares Zubehör (1) bildet, das an dem Tank (20) fixiert ist, sodass der Auslass (13) zum Abgeben von Flüssigkeit in den Tank (20) über eine obere Öffnung (20a) des Tanks (20) positioniert ist.

9. Vorrichtung nach Anspruch 8, wobei die Montageanordnung (16c, 16d) dazu konfiguriert ist, die Vorrichtung (1) so an dem Tank (20) zu fixieren, dass sich die Sensoranordnung (15a, 15b) über eine Tanköffnung (20a) in das Innere des Tanks (20) erstreckt oder sich benachbart einer Tankumfangswand (20c) außerhalb des Tanks (20) befindet, um so ein Auslösesignal zu erzeugen, wenn die Flüssigkeit einen vorbestimmten Pegel (15a', 15b') in dem Tank (20) erreicht.

10. Vorrichtung nach Anspruch 8 oder 9, die einen Körper (16) und einen überhängenden Arm (16b) umfasst, der dazu eingerichtet ist, sich über eine Tanköffnung (20a) des Tanks (20) und wahlweise über die Öffnung (20a) in den Tank (20) zu erstrecken, wobei der überhängende Arm (16) aus mindestens einem von dem Auslass (13) und der Sensoranordnung gebildet ist oder mindestens eines davon hält.

11. Vorrichtung nach Anspruch 10, wobei der überhängende Arm (16b) einen Verbindungsabschnitt (16e) zum Verbinden eines Abdeckelements (16d) umfasst, das dazu konfiguriert ist, die Öffnung (20a) des Tanks (20) abzudecken, wobei sich wahlweise der Auslass (13) und/oder die Sensoranordnung durch den Verbindungsabschnitt (16e) erstrecken oder den Verbindungsabschnitt bilden oder einstückig mit dem Verbindungsabschnitt und dem Abdeckelement (16d) sind.

12. Vorrichtung nach einem der Ansprüche 8 bis 11, die ein Abdeckelement (16d) umfasst, das dazu konfiguriert ist, eine Tanköffnung (20a) des Tanks (20) zu schließen, wobei das Abdeckelement (16d) einen Durchlass (16e) begrenzt, wie etwa eine Durchgangsöffnung, durch den sich der Auslass (13) erstreckt oder durch den der Auslass Flüssigkeit in den Tank (20) abgeben kann, wobei sich die Sensoranordnung (15a, 15b) wahlweise durch den Durchlass oder durch einen anderen Durchlass, der von dem Abdeckelement begrenzt wird, in den Tank erstreckt oder außerhalb des Tanks (20) eingeschlossen ist.

13. Vorrichtung nach Anspruch 11 oder 12, wobei das Abdeckelement (16d) eine Montageanordnung (16f) zum reversiblen Montieren des Abdeckelements (16d) an mindestens einem von dem Tank (20), wie etwa an einem Rand, der die Tanköffnung (20a) begrenzt, und/oder an einem Hauptmaschinenkörper (22) der Getränkemaschine (2), z. B. durch Einhaken an dem Hauptmaschinenkörper (22), umfasst.

14. Vorrichtung nach einem der Ansprüche 8 bis 13, die einen Vorrichtungskörper (16) und eine Montageanordnung (16c; 16b, 16d, 16e, 16f) zum reversiblen oder irreversiblen Montieren des Vorrichtungskörpers (16) an dem Tank (20) und/oder an einem Hauptmaschinenkörper (22) der Getränkemaschine (2) umfasst, wie etwa:
- eine untere Montageanordnung (16c), wie etwa einen Fuß, zum reversiblen oder irreversiblen Montieren des Vorrichtungskörpers (16) an einem unteren Teil (20b) des Tanks (20) und/oder an einem unteren Teil des Hauptmaschinenkörpers (22), wobei die untere Montageanordnung (16c) wahlweise eine Plattform umfasst, die von einem Bodenteil des Vorrichtungskörpers (16) vorspringt und/oder sich unter dem Auslass (13) erstreckt; und/oder
- eine obere Montageanordnung (16b, 16d, 16e, 16f), wie etwa ein Oberteil, zum reversiblen oder irreversiblen Montieren des Vorrichtungskörpers (16) an einem oberen Teil (20a) des Tanks (20) und/oder an einem oberen Teil des Hauptmaschinenkörpers (22), wobei die obere Montageanordnung (16b, 16d, 16e, 16f) wahlweise einen Arm (16b) umfasst, der von einem oberen Teil des Vorrichtungskörpers (16) vorspringt und/oder sich über dem Auslass (13) erstreckt, wie etwa einen Arm, der ein Abdeckelement (20d) bildet oder daran fixiert ist; und/oder
- eine erste Montageanordnung (16c), wie etwa eine untere Montageanordnung, z. B. einen Fuß, und eine zweite Montageanordnung (16b, 16d, 16e, 16f), z. B. eine obere Montageanordnung, die reversibel oder irreversibel an der Maschine (2) fixiert werden können, z. B. an dem Tank (20) und/oder Hauptmaschinenkörper (22), durch Aneinanderbefestigen der ersten und der zweiten Anordnungen (16b, 16c, 16d, 16e, 16f) durch eine Fixieranordnung (16bc), die einen beliebigen Verbinder, der die Verbindungsvorrichtung (1) reversibel oder irreversibel direkt oder indirekt an der Maschine (2), z. B. einem Maschinentank (20) und/oder Maschinenhauptkörper (22), fixiert, wie etwa einen mechanischen oder physischen oder chemischen Verbinder, einschließen kann, z. B. eines oder mehrere von Haken, Clips, Schnappverschlüssen, Klemmen, Nieten, Schrauben, Nägeln, Reibungsbefestigern, geometrischen Befestigern, magnetischen Verbindern, Klebeflächen und Schweißflächen, wahlweise wenn die ersten und zweiten Anordnungen (16b, 16c, 16d, 16e, 16f) aneinander fixiert sind:
- wobei sie sich über zwei Extremitäten der Maschine (2), z. B. über den Tank (20) und/oder Hauptmaschinenkörper (22), erstrecken, um eine Klemme zu bilden, die an der Maschine (2), z. B. an dem Tank (20) und/oder Hauptmaschinenkörper (22), gesichert ist, wobei die zwei Extremitäten beispielsweise ein Oberteil und ein Bodenteil der Maschine (2), z. B. des Tanks (20) und/oder Hauptmaschinenkörpers (22), bilden; und/oder
- wobei sie sich außerhalb über und um die Maschine (2), z. B. außerhalb über und um den Tank (20) und/oder den Hauptmaschinenkörper (22), erstrecken und wahlweise durch eine Öffnung (20a) des Tanks (20) und/oder des Hauptmaschinenkörpers (22) verlaufen; und/oder
- wobei sie zwischen sich eine Öffnung (16c') begrenzen, durch die das externe System (3) mit dem Einlass (10) verbunden wird.

15. Getränkemaschine (2), umfassend eine Verbindungsvorrichtung (1) nach einem der vorstehenden Ansprüche, wobei die Vorrichtung (1) dazu eingerichtet ist, die Maschine (2) mit einem externen Flüssigkeitsabgabesystem (3), z. B. einem Wasserverteilungsnetz, zu verbinden, um die Flüssigkeit der Maschine (2) zuzuführen, wobei die Maschine wahlweise eines oder mehrere aufweist von:
- einem Einlass (24) zum Zuführen eines Inhaltsstoffs, wie etwa eines Inhaltsstoffs, der in einer Kapsel enthalten ist, zum Verarbeiten mit der Flüssigkeit in einer Verarbeitungs- und Abgabeeinheit (24, 25), um ein Getränk zuzubereiten;
- einem Auslass (25) zum Abgeben eines Getränks aus einer Verarbeitungs- und Abgabeeinheit (24, 25), wie etwa einem Auslass (25), der sich über einem Träger (26) zum Platzieren eines Benutzerbehälters, z. B. einer Tasse oder eines Bechers, zum Auffangen des Getränks, das durch den Auslass (25) abgegeben wird, befindet;
- einem Betätigungselement, wie etwa einem Griff (23) oder einem Motor, zum Betätigen einer Getränkeverarbeitungs- und -abgabeeinheit (24, 25) zum Aufnehmen und/oder Entleeren eines Inhaltsstoffs, wie etwa eines Inhaltsstoffs, der in einer Kapsel enthalten ist, in die/aus der Einheit (24, 25);
- einer Pumpe zum Pumpen der Flüssigkeit von dem Tankauslass (20d) zu einem Getränkeabgabeauslass (25), wahlweise über eine Mischkammer zum Mischen der Flüssigkeit mit einem Inhaltsstoff, wie etwa einem Inhaltsstoff, der in einer Kapsel enthalten ist;
- einem Wärmekonditionierer, wie etwa einer Heiz- und/oder Kühleinrichtung, zur Wärmekonditionierung der Flüssigkeit aus dem Tankauslass (20d);
- einer Maschinensteuereinheit, wie etwa einer Steuereinheit mit einer Benutzerschnittstelle (27);
- einem elektrischen Verbinder zum Zuführen von Leistung über einen Leistungsverbinder (14c, 14d) an die Verbindungsvorrichtung (1);
- einem Flüssigkeitsspeichertank (20) mit einer oberen Öffnung (20a) zum Zuführen von Flüssigkeit in den Tank, wie etwa einer Öffnung (20a), die durch einen Rand des Tanks (20) begrenzt ist, wobei der Tank (20) wahlweise durch ein Bodenteil (20b) und eine Umfangswand (20c) begrenzt ist, die sich von und über dem Bodenteil (20b) in Richtung der Öffnung (20a) erstreckt, und/oder einen Tankauslass (20d) zum Abgeben von Flüssigkeit an eine Getränkeverarbeitungs- und -abgabeeinheit (24, 25) der Maschine (2) aufweist; und
- einem entfernbaren Tankdeckel (20'), wie etwa einem Tankdeckel (20'), der durch ein Abdeckelement (16) ersetzbar ist, das die Verbindungsvorrichtung (1) umfasst.

## Revendications

1. Dispositif de raccordement (1) pour le raccordement d'une machine à boisson (2) à un système externe de distribution de liquide (3), par exemple, un réseau de distribution d'eau, pour alimenter un tel liquide à ladite machine (2), ledit dispositif de raccordement (1) comprenant :
- une entrée (10) pour un raccordement fluidique audit système externe (3) ;
- une sortie (13) pour distribuer le liquide à partir dudit système externe (3) par l'intermédiaire de l'entrée (10) jusqu'à ladite machine à boisson (2) ;
- un agencement de vanne (12a, 12b) commutable entre une configuration ouverte pour établir un raccordement fluidique entre l'entrée (10) et la sortie (13) et une configuration fermée pour interrompre le raccordement fluidique, tel qu'un agencement de vanne (12a, 12b) raccordé à l'entrée (10) par l'intermédiaire d'un connecteur de fluide (11) par exemple, un connecteur de fluide (11) fixé à une partie de châssis (16a) d'un corps (16) d'un tel dispositif (1) ; et
- une unité de commande (14) pour commuter l'agencement de vanne (12a, 12b) entre sa configuration ouverte et sa configuration fermée,
**caractérisé en ce que** l'agencement de vanne (12a, 12b) comprend deux vannes ou plus (12a, 12b) qui sont en configuration fluidique en série entre l'entrée (10) et la sortie (13), au moins deux vannes telles (12a, 12b) qui sont en configuration fluidique en série étant commandées par l'unité de commande (14) :
- en parallèle pour être l'une et l'autre simultanément ouvertes pour établir le raccordement fluidique entre l'entrée (10) et la sortie (13) ou l'une et l'autre simultanément fermées pour interrompre le raccordement fluidique ; ou
- séparément de sorte qu'une première vanne (12a) parmi ces vannes (12a, 12b) est ouverte ou fermée pour établir ou interrompre le raccordement fluidique entre l'entrée (10) et la sortie (13) selon le besoin pour alimenter un liquide dans ladite machine et de sorte qu'une deuxième vanne (12b) parmi ces vannes (12a, 12b) est ouverte tant que la première vanne (12a) s'ouvre et se ferme de la façon commandée par l'unité de commande (14) et est fermée lorsque la première vanne (12a) fonctionne mal, éventuellement au moins un capteur (15c), par exemple un débitmètre et/ou un capteur de niveau de remplissage excessif, étant raccordé à l'unité de commande (14) pour détecter un écoulement en cours de liquide par l'entrée (10) et la sortie (13) après que l'unité de commande (14) a tenté de commuter la première vanne (12a) dans sa configuration fermée et pour déclencher l'unité de commande (14) pour commuter la deuxième vanne (12b) dans sa configuration fermée,
éventuellement l'unité de commande (14) étant agencée pour détecter un mauvais fonctionnement d'au moins une vanne (12a, 12b) pour indiquer alors à un utilisateur un tel dysfonctionnement par l'intermédiaire d'un indicateur (14b) et/ou pour bloquer la vanne qui ne fonctionne pas mal dans sa configuration fermée avec ou sans désactivation automatique d'un tel dispositif (1).

2. Dispositif selon la revendication 1, qui comprend un agencement de capteur (15a, 15b) raccordé à l'unité de commande (14) qui est configuré pour commuter l'agencement de vanne (12a, 12b) en réponse à un signal de déclenchement provenant de l'agencement de capteur (15a, 15b).

3. Dispositif selon la revendication 2, dans lequel la sortie (13) est configurée pour distribuer un liquide depuis ledit système externe (3) vers un réservoir (20) de ladite machine (2) ou d'un tel dispositif de raccordement (1), l'agencement de capteur (15a, 15b) comprenant :
- un capteur de niveau bas (15a) pour détecter un niveau bas (15a') de liquide dans ledit réservoir (20) pour générer un signal de déclenchement pour commuter l'agencement de vanne (12a, 12b) vers la configuration ouverte de façon à remplir ledit réservoir (20) avec du liquide distribué par la sortie (13), l'unité de commande (14) étant éventuellement agencée pour commuter l'agencement de vanne (12a, 12b) dans la configuration fermée :
- lorsqu'une période de temps prédéterminée s'est écoulée après commutation de l'agencement de vanne (12a, 12b) dans la configuration ouverte, la période de temps prédéterminée étant éventuellement ajustable par l'utilisateur, par exemple, pour l'ajuster à un débit de liquide alimenté depuis ledit système de distribution externe (3) et/ou pour l'ajuster à un volume de stockage maximal dudit réservoir (20) ;
et/ou
- lorsqu'un autre capteur de niveau détectant un niveau de remplissage excessif au-dessus du niveau haut (15b') génère un signal de déclenchement destiné à commuter l'agencement de vanne ou lorsqu'un volume prédéterminé de liquide mesuré par un autre capteur (15c) raccordé à l'unité de commande (14) a été distribué par l'intermédiaire de la sortie (13), le volume prédéterminé étant éventuellement ajustable par l'utilisateur, par exemple, pour l'ajuster à un volume de stockage maximal dudit réservoir (20) ;
ou
- un capteur de niveau haut (15b) pour détecter un niveau haut (15b') de liquide dans ledit réservoir (20) pour générer un signal de déclenchement destiné à commuter l'agencement de vanne (12a, 12b) vers la configuration fermée, éventuellement l'unité de commande (14) étant configurée de façon à lire de manière intermittente le capteur de niveau haut (15b), par exemple, à des intervalles de temps dans la plage de 1 à 20 ou 30 min et maintenir l'agencement de vanne (12a, 12b) dans la configuration fermée tant qu'un niveau haut (15b') de liquide est détecté, puis commuter temporairement l'agencement de vanne (12a, 12b) dans la configuration ouverte jusqu'à ce que le niveau haut (15b') de liquide soit de nouveau détecté, moyennant quoi le capteur de niveau haut (15b) est lu de manière continue ou à des intervalles courts par l'unité de commande (14), tels que des intervalles de moins de 5 secondes, par exemple, des intervalles dans la plage de 0,1 à 3 secondes ;
ou
- un capteur de niveau bas (15a) pour détecter un niveau bas (15a') de liquide dans ledit réservoir (20) pour générer un signal de déclenchement pour commuter l'agencement de vanne (12a, 12b) vers la configuration ouverte de façon à remplir ledit réservoir (20) avec du liquide distribué par la sortie (13) et un capteur de niveau haut (15b) pour détecter un niveau haut (15b') de liquide dans ledit réservoir (20) pour générer un signal de déclenchement pour commuter l'agencement de vanne (12a, 12b) vers la configuration fermée, éventuellement l'unité de commande (14) étant également agencée pour commuter l'agencement de vanne (12a, 12b) dans la configuration fermée :
- lorsqu'une période de temps prédéterminée s'est écoulée après commutation de l'agencement de vanne (12a, 12b) dans la configuration ouverte, la période de temps prédéterminée étant éventuellement ajustable par l'utilisateur, par exemple, pour l'ajuster à un débit de liquide alimenté depuis ledit système de distribution externe (3) et/ou pour l'ajuster à un volume de stockage maximal dudit réservoir (20) ; et/ou
- lorsqu'un capteur supplémentaire (15c) fournit un signal à l'unité de commande (14) qui indique que le niveau haut (15b') a été dépassé.

4. Dispositif selon la revendication 3, dans lequel ledit capteur supplémentaire (15c) comprend :
- un capteur de niveau supplémentaire raccordé à l'unité de commande (14) et agencé pour générer un signal de déclenchement pour commuter l'agencement de vanne lorsqu'un niveau prédéterminé au-dessus du niveau haut (15b') est détecté ; et/ou
- un débitmètre (15c) raccordé à l'unité de commande (14) et mesurant un volume de liquide distribué qui est distribué par l'intermédiaire de la sortie (13), l'agencement de vanne étant commuté dans la configuration fermée lorsque le volume mesuré atteint un volume prédéterminé, le volume prédéterminé étant éventuellement réglable par l'utilisateur, par exemple pour être ajusté à un volume de stockage maximum dudit réservoir (20).

5. Dispositif selon la revendication 3 ou 4, dans lequel l'agencement de capteur (15a, 15b) comprend au moins l'un parmi un capteur optique, un capteur électrique, par exemple, un capteur capacitif, et un capteur de flotteur pour détecter un flotteur dans ledit réservoir (20).

6. Dispositif selon l'une quelconque des revendications 2 à 5, qui comprend un élément (15) portant l'agencement de capteur (15a, 15b), éventuellement l'élément (15) ayant une ou plusieurs des caractéristiques a) à d) suivantes :
a) l'élément (15) s'étend dans une direction généralement dressée (15') et/ou dans une direction généralement horizontale (15") agencé pour correspondre généralement à une paroi (20c) de la machine (2), telle qu'une paroi périphérique (20c) d'un réservoir (20) de ladite machine (2), le long de (d'une) direction(s) correspondante(s) (20c', 20c"), lorsqu'un tel dispositif (1) est fixé audit réservoir (20) ;
b) l'élément (15) s'étend dans une direction généralement dressée d'une manière à s'étendre généralement le long de la paroi de réservoir (20c) à l'intérieur ou à l'extérieur d'un réservoir (20) de ladite machine, lorsqu'un tel dispositif (1) est fixé au réservoir (20) ;
c) l'élément (15) forme une paroi (15) d'un corps (16) dudit dispositif (1) ;
d) l'élément (15) est formé par une carte à circuit imprimé qui assure l'interface d'au moins un ou deux capteur(s) (15a, 15b) de l'agencement de capteur (15a, 15b) vers l'unité de commande (14).

7. Dispositif selon une quelconque revendication précédente, dans lequel l'unité de commande (14) est raccordée à au moins l'une parmi : une source d'alimentation par l'intermédiaire d'un connecteur d'alimentation (14c, 14d) ; et une interface utilisateur (14a, 14b) telle qu'une interface comprenant un commutateur d'alimentation et/ou de réinitialisation (14a) et/ou un indicateur de commande, par exemple, un voyant de commande (14b).

8. Dispositif selon une quelconque revendication précédente, qui comprend en outre un agencement d'assemblage (16c, 16d) pour fixer de manière réversible ou irréversible ledit dispositif de raccordement (1) à ladite machine (2), par exemple à un réservoir (20) de celle-ci, éventuellement un tel dispositif (1) formant un accessoire amovible par l'utilisateur (1) fixé audit réservoir (20) de sorte que la sortie (13) est positionnée pour distribuer un liquide dans ledit réservoir (20) par l'intermédiaire d'une ouverture supérieure (20a) dudit réservoir (20).

9. Dispositif selon la revendication 8, dans lequel l'agencement d'assemblage (16c, 16d) est configuré pour fixer un tel dispositif (1) audit réservoir (20) de sorte que l'agencement de capteur (15a, 15b) s'étend à l'intérieur du réservoir (20) par l'intermédiaire d'une ouverture de réservoir (20a) ou est situé adjacent à une paroi périphérique de réservoir (20c) de façon externe au réservoir (20), de façon à générer un signal de déclenchement lorsque le liquide atteint un niveau prédéterminé (15a', 15b') dans le réservoir (20).

10. Dispositif selon la revendication 8 ou 9, qui comprend un corps (16) et un bras en surplomb (16b) agencé pour s'étendre par-dessus une ouverture de réservoir (20a) dudit réservoir (20) et éventuellement dans le réservoir (20) par l'intermédiaire de l'ouverture (20a), le bras en surplomb (16) étant formé de, ou contenant, au moins un parmi la sortie (13) et l'agencement de capteur.

11. Dispositif selon la revendication 10, dans lequel le bras en surplomb (16b) comprend une partie de raccordement (16e) pour le raccordement d'un élément de couverture (16d) qui est configuré pour couvrir l'ouverture (20a) dudit réservoir (20), éventuellement la sortie (13) et/ou l'agencement de capteur s'étendant à travers la partie de raccordement (16e) ou formant la partie de raccordement ou étant solidaires de la partie de raccordement et de l'élément de couverture (16d).

12. Dispositif selon l'une quelconque des revendications 8 à 11, qui comprend un élément de couverture (16d) qui est configuré pour fermer une ouverture de réservoir (20a) dudit réservoir (20), l'élément de couverture (16d) délimitant un passage (16e), tel qu'un trou traversant, à travers lequel la sortie (13) s'étend ou à travers lequel la sortie peut distribuer un liquide dans ledit réservoir (20), éventuellement l'agencement de capteur (15a, 15b) s'étendant à travers ledit passage ou à travers un passage différent délimité par l'élément de couverture dans ledit réservoir ou étant confiné à l'extérieur du réservoir (20).

13. Dispositif selon la revendication 11 ou 12, dans lequel l'élément de couverture (16d) comprend un agencement d'assemblage (16f) pour assembler de manière réversible l'élément de couverture (16d) à au moins un parmi ledit réservoir (20), tel qu'à un rebord délimitant l'ouverture de réservoir (20a), et/ou à un corps de machine principal (22) de ladite machine à boisson (2) par exemple, en étant accroché au corps de machine principal (22).

14. Dispositif selon l'une quelconque des revendications 8 à 13, qui a un corps de dispositif (16) et un agencement d'assemblage (16c ; 16b, 16d, 16e, 16f) pour assembler de manière réversible ou irréversible le corps de dispositif (16) audit réservoir (20) et/ou à un corps de machine principal (22) de ladite machine à boisson (2), tel que :
- un agencement d'assemblage inférieur (16c), tel qu'un pied, pour assembler de manière réversible ou irréversible le corps de dispositif (16) à une partie inférieure (20b) du réservoir (20) et/ou à une partie inférieure du corps de machine principal (22), éventuellement l'agencement d'assemblage inférieur (16c) comprenant une plate-forme faisant saillie à partir d'une partie inférieure du corps de dispositif (16) et/ou s'étendant sous la sortie (13) ; et/ou
- un agencement d'assemblage supérieur (16b, 16d, 16e, 16f), tel qu'un plateau, pour assembler de manière réversible ou irréversible le corps de dispositif (16) à une partie supérieure (20a) du réservoir (20) et/ou à une partie supérieure du corps de machine principal (22), éventuellement l'agencement d'assemblage supérieur (16b, 16d, 16e, 16f) comprenant un bras (16b) faisant saillie à partir d'une partie supérieure du corps de dispositif (16) et/ou s'étendant au-dessus de la sortie (13), tel qu'un bras formant, ou fixé à, un élément de couverture (20d) ; et/ou
- un premier agencement d'assemblage (16c), tel qu'un agencement d'assemblage inférieur, par exemple, un pied, et un deuxième agencement d'assemblage (16b, 16d, 16e, 16f), par exemple, un agencement d'assemblage supérieur, qui peut être fixé de manière réversible ou irréversible à ladite machine (2), par exemple, audit réservoir (20) et/ou corps de machine principal (22), en attachant les premier et deuxième agencements (16b, 16c, 16d, 16e, 16f) l'un à l'autre par un agencement de fixation (16bc) qui peut inclure n'importe quel connecteur qui fixe de manière réversible ou irréversible directement ou indirectement un tel dispositif de raccordement (1) à ladite machine (2), par exemple, le réservoir (20) de la machine et/ou le corps principal (22) de la machine, tel qu'un connecteur physique ou chimique, par exemple, un ou plusieurs parmi des crochets, des attaches, des fermetures à pression, des pinces, des rivets, des vis, des clous, des éléments de fixation à frottement, des éléments de fixation géométriques, des connecteurs magnétiques, des zones de collage et des zones de soudage, éventuellement lorsqu'ils sont fixés conjointement, les premier et deuxième agencements (16b, 16c, 16d, 16e, 16f) :
- s'étendant par-dessus deux extrémités de ladite machine (2), par exemple, par-dessus ledit réservoir (20) et/ou corps de machine principal (22), pour former une pince fixée sur ladite machine (2), par exemple, sur ledit réservoir (20) et/ou corps de machine principal (22), lesdites deux extrémités formant, par exemple, une partie supérieure et inférieure de ladite machine (2), par exemple, dudit réservoir (20) et/ou corps de machine principal (22) ; et/ou
- s'étendant de façon externe par-dessus et autour de ladite machine (2), par exemple, de façon externe par-dessus et autour dudit réservoir (20) et/ou corps de machine principal (22), et passant éventuellement à travers une ouverture (20a) dudit réservoir (20) et/ou corps de machine principal (22) ; et/ou
- délimitant entre eux une ouverture (16c') pour que ledit système externe (3) soit raccordé à l'entrée (10).

15. Machine à boisson (2) comprenant un dispositif de raccordement (1) tel que défini dans l'une quelconque revendication précédente, le dispositif (1) étant agencé pour raccorder la machine (2) à un système externe de distribution liquide (3), par exemple un réseau de distribution d'eau, pour alimenter un tel liquide à ladite machine (2), éventuellement la machine ayant un ou plusieurs parmi :
- une entrée (24) pour alimenter un ingrédient, tel qu'un ingrédient contenu dans une cartouche, à traiter avec ledit liquide dans une unité de traitement et de distribution (24, 25) pour préparer une boisson ;
- une sortie (25) pour distribuer une boisson depuis une unité de traitement et de distribution (24, 25) telle qu'une sortie (25) située au-dessus d'un support (26) pour la mise en place d'un récipient de l'utilisateur, par exemple, une tasse ou un mug, pour recueillir la boisson distribuée par la sortie (25) ;
- un actionneur, tel qu'une poignée (23) ou un moteur, pour actionner une unité de traitement et distribution de boisson (24, 25) pour recevoir dans et/ou évacuer de l'unité (24, 25) un ingrédient, tel qu'un ingrédient contenu dans une cartouche ;
- une pompe pour pomper ledit liquide depuis la sortie de réservoir (20d) vers une sortie de distribution de boisson (25), éventuellement par l'intermédiaire d'une chambre de mélange pour mélanger ledit liquide avec un ingrédient tel qu'un ingrédient contenu dans une cartouche ;
- un conditionneur thermique, tel qu'un dispositif de chauffage et/ou de refroidissement, pour conditionner thermiquement ledit liquide à partir de la sortie de réservoir (20d) ;
- une unité de commande de machine telle qu'une unité de commande avec une interface utilisateur (27) ;
- un connecteur électrique pour alimenter en énergie par l'intermédiaire d'un connecteur d'alimentation (14c, 14d) vers le dispositif de raccordement (1) ;
- un réservoir de stockage de liquide (20) avec une ouverture supérieure (20a) pour alimenter un liquide dans le réservoir, telle qu'une ouverture (20a) délimitée par un rebord du réservoir (20), éventuellement ledit réservoir (20) étant délimité par une partie inférieure (20b) et une paroi périphérique (20c) s'étendant à partir de la partie inférieure (20b) et au-dessus de celle-ci en direction de l'ouverture (20a) et/ou ayant une sortie de réservoir (20d) pour distribuer le liquide à une unité de traitement et distribution de boisson (24, 25) de la machine (2) ; et
- un couvercle de réservoir amovible (20'), tel qu'un couvercle de réservoir (20') remplaçable par un élément de couverture (16) constitué par le dispositif de raccordement (1).
